# FASCICULE DE BREVET EUROPEEN

(11) **EP 0 596 821 B1**
(45) Date de publication et mention de la délivrance du brevet: **04.09.1996**
(21) Numéro de dépôt: 93450009.1
(22) Date de dépôt: 27.10.1993
(51) Int. Cl.: F16L 59/02

(54) **Revêtement de matériau de protection thermique du type à agrégat de fibres minérales et son procédé d'obtention**
Beschichtung für wärmedämmendes Material mit Zuschlagstoffen aus Mineralfasern und die Herstellung derselben
Coating for thermal insulation material containing mineral fibres and process for manufacturing the same

(30) Priorité: 05.11.1992 FR 9213573
(43) Date de publication de la demande: 11.05.1994
(73) Titulaire: AEROSPATIALE Société Nationale Industrielle, F-75781 Paris Cédex 16 (FR)
(72) Inventeur: Tisné, Jean-Louis, F-33127 Martignas (FR)
(74) Mandataire: Thébault, Jean-Louis

(56) Documents cités:
- EP-A- 0 283 385
- DE-C- 3 741 732

## Description

La présente invention a trait aux matériaux de protection thermique du type constitué d'un agrégat de fibres courtes minérales, notamment de carbone ou de silice.

Ces matériaux sont utilisés pour limiter la température de structures résistantes ou d'équipements soumis à des flux thermiques convectifs ou radiatifs qui proviennent de sources chaudes telles que des gaz d'échappement de tuyères par exemple, ou d'échauffements cinétiques engendrés par exemple lors du lancement de fusées ou de rentrée dans l'atmosphère.

Dans le document EP-A-567 417 (état de la technique au sens de l'article 54(3) CBE) déposé au nom de la Demanderesse, est décrit un exemple de réalisation d'un dispositif de protection thermique d'une structure à l'aide de tels matériaux, constitués d'un agrégat de fibres courtes de carbone ou de silice, liées par un liant formé du même constituant et éventuellement d'une résine appropriée, ledit agrégat étant mis en oeuvre sous la forme d'au moins un élément monobloc, conformé et dimensionné en conséquence et rapporté par collage sur ladite structure porteuse.

Ces matériaux, de même que tous les matériaux basse densité qui ont des fibres plus ou moins libres en surface, présentent l'inconvénient, sous une sollicitation mécanique accidentelle, telle que choc léger ou frottement, ou lors d'essais mécaniques de recette (vibration, timbrage, etc...), ou en cours de mission (lancement, rentrée dans l'atmosphère), de pouvoir laisser s'échapper des fibrilles ou morceaux de liant. Ils ne répondent donc pas aux normes spatiales (ESA PSS 01-201 : Contrôle de la propreté et de la contamination) qui imposent de ne pas polluer, par des particules, les salles blanches d'intégration et les autres éléments de l'objet réalisé, en particulier les mécanismes et l'électronique.

Dans EP-A-567 417, on évoque, dans le cas d'un matériau formé d'un agrégat de carbone, sa tendance à l'effritement superficiel sous l'action des écoulements gazeux le long de la paroi du dispositif de protection thermique et il est suggéré d'y remédier par l'adjonction, à la manière connue, d'un film en matière plastique perforé, rapporté par collage sur la face externe dudit dispositif de protection thermique.

Cette technique présente toutefois des inconvénients liés à la pose du film, à la nécessité de perforer ce dernier, qui n'est pas poreux et au problème de la masse de l'ensemble film + colle.

Par ailleurs, les solutions connues mises en oeuvre pour éviter ou limiter de tels effritements en surface d'autres matériaux à base de fibres utilisés comme revêtements protecteurs thermiques, ne sont pas transposables aux matériaux objets de la présente invention. C'est le cas des matériaux proches, tels que les pavés ou tuiles, utilisés sur les navettes spatiales, qui n'ont pas de liant organique, les fibres étant liées du fait de la réalisation par frittage des éléments. Ces éléments sont cependant l'objet d'un revêtement à partir d'un matériau minéral, du verre par exemple, mais essentiellement pour obtenir de bonnes caractéristiques optiques en surface.

C'est également le cas des protections thermiques de type matelas constitués de feutre de fibres minérales ensachées dans des tissus résistant thermiquement et qui sont enduits d'un produit organique pour les rendre hydrofuges.

Le but de l'invention est de supprimer, ou tout au moins de réduire très substantiellement, l'effritement superficiel de matériaux de protection thermique du type à agrégat de fibres courtes minérales, notamment de carbone ou de silice, tout en conservant à ces matériaux de bonnes caractéristiques optiques et une bonne aptitude à la dépressurisation.

A cet effet, l'invention a pour objet un revêtement de matériau de protection thermique du type à agrégat de fibres minérales, notamment de carbone ou de silice, comprenant au moins une couche d'un matériau à base de silicone, recouvrant au moins la surface exposable aux causes d'effritement du dispositif de protection thermique constitué à l'aide dudit matériau à agrégat.

L'invention a également pour objet un procédé d'obtention d'un tel revêtement, notamment appliqué à la réalisation d'un dispositif de protection thermique constitué d'un ou plusieurs éléments formés dudit matériau à agrégat, moulés et usinés en forme et rapportés par collage sur une structure porteuse, le procédé consistant, après nettoyage par aspiration de la surface des éléments et collage entre eux et sur ladite structure porteuse, à projeter sur la surface des éléments au moins une couche mince d'un matériau à base de silicone, puis à effectuer un séchage-polymérisation.

De préférence, dans une telle application, le matériau de revêtement à base de silicone est le même matériau que celui utilisé au collage desdits éléments sur la structure porteuse, par exemple la résine silicone dénommée commercialement CAF 730 fabriquée par la Société RHONE-POULENC.

Lesdits éléments sont, notamment, des pavés ou analogues formés d'un agrégat de silice constitués de fibres de silice liées entre elles par un liant formé de silice et d'une résine formo-phénolique.

Pour projeter le matériau à base de silicone, on peut éventuellement ajouter un diluant approprié.

Le séchage, effectué de préférence à une température voisine de la température ambiante et pendant un temps suffisant de plusieurs heures, par exemple de l'ordre de 24 heures, entraîne une polymérisation du silicone.

L'épaisseur du revêtement est déterminée en sorte d'être suffisant pour retenir les fibres, fibrilles ou autres particules, tout en permettant la dépressurisation des éléments lors de la mise sous vide du dispositif de protection, en sortie d'atmosphère après lancement. L'épaisseur du revêtement est par ailleurs réduite au minimum afin de limiter la masse.

De préférence, le matériau à base de silicone est choisi dans le groupe de produits qualifiés spatial, c'est-à-dire satisfaisant à la norme de dégazage ESA PSS 01-702A (Essai thermique sous vide pour la sélection de matériaux spatiaux), à savoir : dégazage total < 1% et volatils condensables < 0,1%.

Parmi de tels produits, on peut citer par exemple le produit dénommé commercialement DC 6125 grade spatial, fabriqué par la Société DOW CORNING.

On peut néanmoins utiliser un matériau à base de silicone non compris dans le groupe ci-dessus, auquel cas, on pourra effectuer, après projection du matériau et séchage-polymérisation, un post-traitement d'étuvage sous un vide secondaire, par exemple de l'ordre de 10⁻⁴ mbar, à une température de l'ordre de 120°C, pendant une durée de l'ordre de 24 heures. Ce post-traitement permet ainsi de répondre à la norme de dégazage ci-dessus.

A titre d'exemple, le revêtement est obtenu en deux couches d'épaisseur totale comprise entre 50 et 100 micromètres environ, avec un séchage entre couches de l'ordre de quelques minutes.

Un tel traitement de surface de matériaux à agrégat de fibres minérales réduit la possibilité d'extraction de particules et rend ces matériaux compatibles avec une salle blanche de classe 100.000.

Ce traitement conserve néanmoins au dispositif de protection thermique de bonnes caractéristiques optiques, à savoir une émissivité > 0,8 et une absorption solaire < 0,5.

L'invention s'applique à des matériaux de protection thermique du type à agrégat de fibres de carbone liées entre elles essentiellement par du carbone.

L'invention s'applique d'une manière générale à des matériaux à agrégat de fibres minérales autres que le carbone et la silice, par exemple à des fibres de verre, alumine, carbure de silicium, zircone.

Le matériau à base de silicone est éventuellement chargé pour améliorer par exemple la conductivité électrique ou les propriétés optiques de surface.

Il est à noter, par ailleurs, que les pavés ou analogues en matériau à agrégat de fibres minérales peuvent être, avant leur pose sur la structure porteuse, entièrement recouverts du revêtement selon l'invention, pour assurer la propreté des opérations ultérieures.

## Revendications

1. Revêtement de matériau de protection thermique du type à agrégat de fibres minérales, notamment de carbone ou de silice, comprenant au moins une couche d'un matériau à base de silicone, recouvrant au moins la surface exposable aux causes d'effritement du dispositif de protection thermique constitué à l'aide dudit matériau à agrégat.

2. Revêtement suivant la revendication 1, caractérisé en ce que le matériau à base de silicone est choisi dans le groupe constitué des produits qualifiés spatial.

3. Revêtement suivant la revendication 1 ou 2, caractérisé en ce que le matériau est une résine silicone.

4. Revêtement suivant l'une des revendications 1 à 3, caractérisé en ce que la ou les couches ont une épaisseur total comprise entre 50 et 100 micromètres environ.

5. Revêtement suivant l'une des revendications 1 à 4, caractérisé en ce que le matériau est un agrégat de fibres courtes de silice liées entre elles par un liant formé de silice et d'une résine formo-phénolique.

6. Procédé pour l'obtention du revêtement selon l'une des revendications 1 à 5, plus particulièrement appliqué à la réalisation d'un dispositif de protection thermique constitué d'un ou plusieurs éléments formés dudit matériau à agrégat, moulés et usinés en forme, et, rapportés par collage sur une structure porteuse, le procédé consistant, après nettoyage par aspiration de la surface des éléments et collage entre eux et sur ladite structure porteuse, à projeter sur la surface des éléments au moins une couche mince d'un matériau à base de silicone, puis à effectuer un séchage.

7. Procédé suivant la revendication 6, caractérisé en ce que le séchage-polymérisation est effectué pendant une durée de plusieurs heures et, de préférence, à une température voisine de la température ambiante.

8. Procédé suivant la revendication 6 ou 7, caractérisé en ce qu'on utilise comme matériau du revêtement une résine silicone identique à celle servant au collage desdits éléments entre eux et sur ladite structure porteuse.

9. Procédé suivant l'une des revendications 6 à 8, caractérisé en ce que l'on projette plusieurs couches en effectuant un séchage après chaque couche.

10. Procédé suivant l'une des revendications 6 à 9, caractérisé en ce que, dans le cas d'un matériau à base de silicone n'appartenant pas au groupe des produits qualifiés spatial, après séchage-polymérisation du revêtement , on opère un post-traitement d'étuvage sous vide secondaire, à une température de l'ordre de 120°C et pendant une durée de l'ordre de 24 heures.

## Patentansprüche

1. Beschichtung für wärmedämmendes Material mit Zuschlagstoffen aus Mineralfasern, insbesondere Kohlenstoff- oder Siliciumdioxidfasern, umfassend wenigstens eine Schicht aus einem Material auf der Basis von Silikon, das wenigstens die einem Zerbröckeln aussetzbaren Oberfläche der thermischen Schutzvorrichtung, die mittels des besagten Zuschlagmaterials gebildet ist, bedeckt.

2. Beschichtung nach Anspruch 1, dadurch gekennzeichnet, daß das Material auf Basis von Silikon ausgewählt ist aus der Gruppe, gebildet aus raumfahrtgeeigneten Produkten.

3. Beschichtung nach Anspruch 1 oder 2, dadurch gekennzeichnet, daß das Material ein Silikonnarz ist.

4. Beschichtung nach einem der Ansprüche 1 bis 3, dadurch gekennzeichnet, daß die Schicht/en eine Gesamtstärke zwischen etwa 50 und 100 µm besitzt/besitzen.

5. Beschichtung nach einem der Ansprüche 1 bis 4 dadurch gekennzeichnet, daß das Material ein Zuschlag aus kurzen Fasern aus Siliciumdioxid ist, die untereinander durch ein Bindemittel, gebildet aus Siliciumdioxid und einem Formpnenolharz, verbunden sind.

6. Verfahren zum Erhalten der Beschichtung gemäß einem der Ansprüche 1 bis 5, insbesondere angewendet auf die Realisierung einer thermischen Schutzvorrichtung, die aus einem oder mehreren Elementen gebildet wird, die aus besagtem Zuschlagmaterial gebildet, gegossen und formgebend bearbeitet sowie durch Kleben auf einer Trägerstruktur aufgebracht werden, wobei das Verfahren darin besteht, daß nach Reinigung der Oberfläche der Elemente durch Absaugung und Verkleben von diesen untereinander und auf besagter Trägerstruktur auf die Elementenoberfläche wenigstens eine dünne Schicht eines Materials auf der Basis von Silikon aufgebracht und danach eine Trocknung bewirkt wird.

7. Verfahren nach Anspruch 6, dadurch gekennzeichnet, daß die Trocknungspolymerisation während einer Dauer von mehreren Stunden und vorzugsweise bei einer Temperatur benachbart zur Umgebungstemperatur bewirkt wird.

8. Verfahren nach Anspruch 6 oder 7, dadurch gekennzeichnet, daß man als Beschichtungsmaterial ein Silikonharz verwendet, das identisch zu demjenigen ist, das zum Verkleben besagter Elemente untereinander und auf besagter Trägerstruktur dient.

9. Verfahren nach einem der Ansprüche 6 bis 8, dadurch gekennzeichnet, daß man mehrere Schichten aufspritzt, wobei nach jeder Schicht eine Trocknung bewirkt wird.

10. Verfahren nach einem der Ansprüche 6 bis 9, dadurch gekennzeichnet, daß man im Fall eines Materials auf der Basis von Siliciumdioxid, das nicht zur Gruppe von raumfahrttauglichen Produkten gehört, nach Trocknungspolymerisation der Beschichtung eine Nachbehandlung durch Erwärmungstrocknen unter Hochvakuum bei einer Temperatur in der Größenordnung von 120°C und während einer Dauer in der Größenordnung von 24 h vornimmt.

## Claims

1. Covering of thermal protection material of the type made of an aggregate of mineral fibres, in particular carbon or silica, comprising at least one layer of a silicon based material, covering at least the surface of the thermal protection device which may be exposed to weathering, the said thermal protection being formed from the said aggregate material.

2. Covering as claimed in claim 1, characterized in that the silicon, based material is chosen from the group of products designated for use in space.

3. Covering as claimed in claim 1 or 2, characterized in that the material is a silicon resin.

4. Covering as claimed in one of the claims 1 to 3, characterized in that the total thickness of the layer(s) is between approximately 50 and 100 micrometers.

5. Covering as claimed in one of the claims 1 to 4, characterized in that the material is an aggregate of short silica fibres bound together by a binder formed from silica and a formo-phenolic resin.

6. Process for obtaining the covering as claimed in one of the claims 1 to 5, in particular applied to the production of a thermal protection device consisting in one or more elements formed from the said aggregate material, the said elements being moulded and machined to shape and attached by adhesive to a load-bearing structure, the process consisting, after the surface of the elements has been cleaned by suction and they are joined together and attached to the said load-bearing structure, in spraying at least one thin layer of a silicon based material onto the surface of the elements, then carrying out a drying process.

7. Process as claimed in claim 6, characterized in that the drying-polymerization process is carried out over a period of several hours and, preferably, at a temperature close to the ambient temperature.

8. Process as claimed in claim 6 or 7, characterized in that the material used as the join the said elements together and to attach them onto the said load-bearing structure.

9. Process as claimed in one of the claims 6 to 8, characterized in that several layers are sprayed on, with a drying process after each layer.

10. Process as claimed in one of the claims 6 to 9, characterized in that in the case of a silicon based material which does not correspond to the group of products designated for use in space, after drying-polymerization of the covering a secondary vacuum oven drying process is carried out at a temperature in the order of 120°C over a period in the order of 24 hours.
